# EUROPÄISCHE PATENTSCHRIFT

(11) **EP 0 640 367 B1**
(45) Veröffentlichungstag und Bekanntmachung des Hinweises auf die Patenterteilung: **08.07.1998**
(21) Anmeldenummer: 94112560.1
(22) Anmeldetag: 11.08.1994
(51) Int. Cl.: B01D 3/32

(54) **Destillationskolonne zur Trennung eines Flüssigkeitsgemisches in mehrere reine Fraktionen**
Distillation column for separating liquid mixtures in multiple pure fractions
Colonne de distillation pour la séparation des mélanges de liquides en plusieurs fractions pures

(30) Priorität: 24.08.1993 DE 4328424
(43) Veröffentlichungstag der Anmeldung: 01.03.1995
(73) Patentinhaber: BASF Aktiengesellschaft, 67063 Ludwigshafen (DE)
(72) Erfinder: Kaibel, Gerd, Dr., D-68623 Lampertheim (DE); Stroezel, Manfred, D-68549 Ilvesheim (DE); Pfeffinger, Joachim, D-67063 Ludwigshafen (DE)

(56) Entgegenhaltungen:
- EP-A- 0 122 367
- DD-A- 143 214
- DE-B- 1 031 280
- US-A- 2 471 134
- US-A- 4 230 533
- AICHE JOURNAL, Bd.33, Nr.4, April 1987 Seiten 643 - 653 ZBIGNIEW FIDKOWSKI 'minimum energy requirements of thermally coupled distillation systems'

## Beschreibung

Die Erfindung betrifft eine Destillationskolonne zur Trennung eines Flüssigkeitsgemisches in mehrere reine Fraktionen, wobei die Destillationskolonne in ihrem mittleren Bereich durch eine in Längsrichtung wirksame Trenneinrichtung in 2 Teile, einen Zulauf- und einen Entnahmeteil, unterteilt ist und die Trennwand aus 2 Wänden mit dazwischen liegender wärmeisolierender Schicht besteht.

Die destillative Auftrennung von Mehrstoffgemischen ist in der Literatur vielfach beschrieben. So wird beispielsweise in Ullmann's Encyclopädie die Technische Chemie, 5. Auflage, Band B 3, Seite 58 ff die Auftrennung von Mehrstoffgemischen durch Hintereinanderschaltung mehrerer Destillationskolonnen beschrieben. Nachteilig an diesem Verfahren ist der hohe apparative Aufwand durch den Bau mehrerer Destillationskolonnnen. In der Zeitschrift Chemie-Ingenieur-Technik 61 (1989), Nr. 2, Seiten 104 - 112 wird ein Verfahren zur destillativen Auftrennung eines Mehrstoffgemisches in mehrere Fraktionen beschrieben, bei dem eine Destillationskolonne mit einer in Längsrichtung wirksamen Trenneinrichtung versehen ist, wodurch die Destillationskolonne in einen Zulauf- und einen Entnahmeteil unterteilt wird. Mit einer derartigen Destillationskolonne ist es möglich, ein Mehrstoffgemisch in nur einer Kolonne in mehrere reine Fraktionen zu trennen. Nachteilig bei dem beschriebenen Verfahren ist, daß es bei Destillationen mit hohen Temperaturdifferenzen zwischen Zulauf- und Entnahmeteil zu einem Wärmestrom durch die Trenneinrichtung hindurch von dem wärmeren in den kälteren Teil kommt. Dadurch sinkt infolge von Maldistribution die Trennleistung der Destillationskolonne und der Energiebedarf zur Erzielung des gewünschten Trennergebnisses steigt an.

Zur Behebung dieses Nachteils wird in der EP-A 0 122 367 vorgeschlagen, die Trennwand konstruktiv so auszubilden, daß sich eine Wärmedämmung ergibt, um eine die Trennwirksamkeit beeinträchtigende Ungleichverteilung der Flüssigkeit durch eine unkontrollierte Verdampfung bzw. Kondensation zu vermeiden. Es wird vorgeschlagen, die Trennwand doppelwandig mit einer innenliegenden wärmeisolierenden Schicht auszuführen und die Trennwand gegebenenfalls auch zu beheizen oder zu kühlen (Seite 5, Zeile 8).

Die Erfindung liegt daher die Aufgabe zugrunde, die genannten Nachteile zu vermeiden und eine konstruktiv einfache Bauform bereitzustellen, mit der sich die Wärmeübertragung über die Trennwand wirksam verringern läßt.

Diese Aufgabe wird erfindungsgemäß dadurch gelöst, daß die Trenneinrichtung aus zwei Wänden mit dazwischen liegendem Gasraum besteht, wobei der Abstand der beiden Wände 1 bis 50 mm, bevorzugt 3 - 10 mm, beträgt und wobei an einem Ende der Trenneinrichtung, bevorzugt dem oberen Ende, ein Gasstrom, bevorzugt Stickstoff, eingeleitet wird und bevorzugt am entgegengesetzten Ende aus der Trenneinrichtung austritt und direkt in die Kolonne oder am Kopf der Kolonne eingeleitet wird.

Weitere Merkmale des erfindungsgemäßen Verfahrens sind Gegenstand der Unteransprüche.

Die Wände der Destillationskolonne werden bevorzugt eben ausgeführt, parallel angeordnet und mit dazwischen liegenden Abstandshaltern ausgeführt.

Im Fall der Verwendung geordneter Packungen werden diese bevorzugt auf beiden Seiten der Trenneinrichtung oder auf der Seite, die die niedrigeren Betriebstemperaturen aufweist, mit Flüssigkeitsabweisern ausgerüstet, welche die Flüssigkeit von der Trenneinrichtung ableiten und dadurch zwischen Trenneinrichtung und flüssigkeitsbenetzter Packung von 1 bis 50 mm, bevorzugt 3 bis 15 mm dickes Gaspolster schaffen.

Die Trenneinrichtung weist bevorzugt auf beiden Seiten oder auf der Seite, die die niedrigeren Betriebstemperaturen der Kolonne aufweist, Flüssigkeitsabweiser auf, welche die Flüssigkeit von der Trenneinrichtung ableiten und dadurch zwischen Trenneinrichtung und flüssigkeitsbenetzten Kolonneneinbauten ein 1 bis 50 mm, bevorzugt 5 bis 20 mm dickes Gaspolster schaffen.

Das Material der verwendeten Flüssigkeitsabweiser ist bevorzugt nicht perforiert oder bei Verwendung von geordneten Packungen aus Drahtgewebe oder perforiertem Material, welches einen mindestens gleich großen oder bevorzugt höheren Durchströmungsdruckverlust als die geordnete Packung aufweist.

Mittels der erfindungsgemäßen Trenneinrichtung wird der Wärmestrom durch die Trenneinrichtung hindurch verringert oder im günstigsten Fall sogar verhindert.

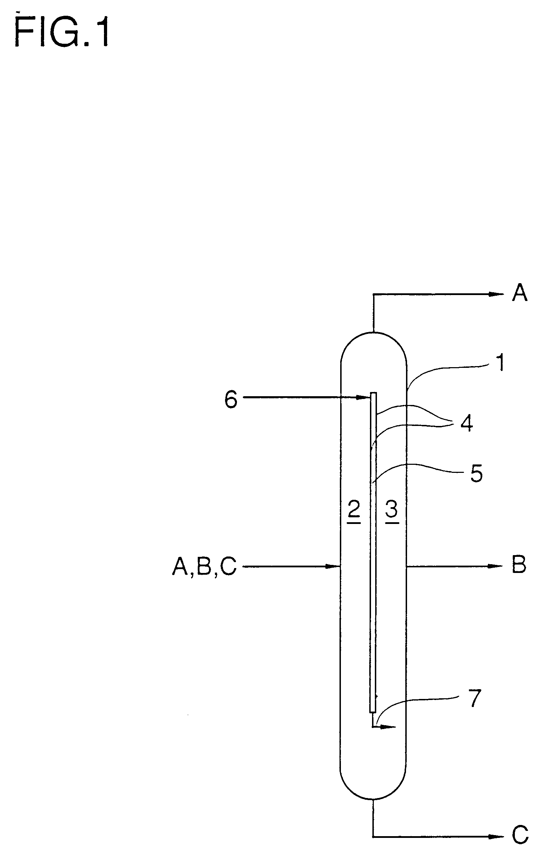

Ein Ausführungsbeispiel der Erfindung ist in der Figur 1 schematisch dargestellt und wird im folgenden näher beschrieben.

### Figur 1

Eine Destillationskolonne mit in Längsrichtung wirkender Trenneinrichtung, bei welcher die Trenneinrichtung aus zwei Wänden mit dazwischenliegendem Gasraum besteht.

### Figur 2

Eine Destillationskolonne, die nicht gemäß der Erfindung ausgeführt ist, mit in Längsrichtung wirkender Trenneinrichtung, bei welcher die Trenneinrichtung aus einer Wand mit Flüssigkeitsabweisern besteht.

Gemäß Figur 1 wird eine Destillationskolonne 1 durch zwei in Längsrichtung angebrachte Wände 4 in einen Zulaufteil 2 und einen Entnahmeteil 3 unterteilt. Zwischen den beiden Wänden befindet sich ein Gasraum 5, welcher mit einem inerten Gas, beispielsweise Stickstoff gespült wird. Das Inertgas 6/7 tritt dabei vorzugsweise am oberen Ende des Gasraums ein und wird bevorzugt am unteren Ende des Gasraums in den Destillationsraum geleitet. Möglich ist auch das Ausfüllen des Gasraums 5 durch ein Material mit geringer Wärmeleitfähigkeit oder die Anbringung von Abstandshaltern im Gasraum zwischen den beiden Wänden zur Erhöhung der mechanischen Stabilität. Bei einer Ausführung mit Abstandshaltern im Gasraum kann der Gasraum wie oben beschrieben mit Inertgas gespült werden. Das Mehrstoffgemisch A, B, C wird in den Zulaufteil 2 zugegeben und in der Destillationskolonne 1 entsprechend der Siedefolge in die reinen Fraktionen getrennt. Die leichtestsiedende Fraktion A wird als Kopfprodukt und die schwerstsiedende Fraktion C als Sumpfprodukt aus der Kolonne 1 abgezogen. Die mittelsiedende Fraktion B wird als Seitenabzug aus dem Entnahmeteil 3 abgezogen.

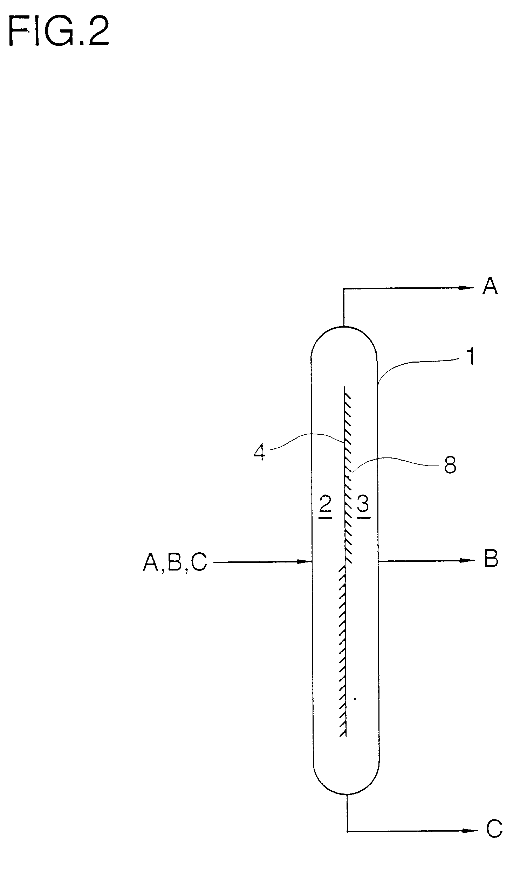

Gemäß Figur 2 wird die Trenneinrichtung so ausgeführt, daß auf einer oder auf beiden Seiten der Trenneinrichtung 4 Flüssigkeitsabweiser 8 - gegebenenfalls abschnittsweise - so angebracht werden, daß die Trenneinrichtung nicht von der Flüssigkeit benetzt werden kann. Zweckmäßig werden die Flüssigkeitsabweiser 8 auf der Seite angebracht, auf welcher die tiefere Betriebstemperatur im Vergleich zwischen Zulaufteil 2 und Entnahmeteil 3 herrscht. Bei der Verwendung von geordneten Packungen können die Flüssigkeitsabweiser 8 auch an der Packung angebracht werden. Wenn als Packungsmaterial Drahtgewebe oder perforiertes Material verwendet wird, werden die Flüssigkeitsabweiser bevorzugt konstruktiv so ausgeführt, daß zwischen der Trenneinrichtung und der Packung ein höherer Duchströmungsdruckverlust herrscht als in der Packung.

## Patentansprüche

1. Destillationskolonne (1) zur Trennung eines Flüssigkeitsgemisches in mehrere reine Fraktionen, wobei die Destillationskolonne in ihrem mittleren Bereich durch eine in Längsrichtung wirksame Trenneinrichtung in 2 Teile, einen Zulauf- und einen Entnahmeteil (2; 3), unterteilt ist und die Trennung aus 2 Wänden (4) mit dazwischen liegender wärmeisolierender Schicht (5) besteht, dadurch gekennzeichnet, daß die Trenneinrichtung aus 2 Wänden mit dazwischen liegenden Gasraum (5) besteht und daß der Abstand der beiden Wände 1 bis 50 mm, bevorzugt 3 bis 10 mm, beträgt und daß an einem Ende der Trenneinrichtung, bevorzugt dem oberen Ende, ein Gasstrom (6; 7), bevorzugt Stickstoff, eingeleitet wird, welcher, bevorzugt am entgegengesetzten Ende, aus der Trenneinrichtung austritt und direkt in die Kolonne oder am Kopf der Kolonne eingeleitet wird.

2. Destillationskolonne nach Anspruch 1, dadurch gekennzeichnet, daß die Trenneinrichtung auf beiden Seiten oder auf der Seite, die die niedrigeren Betriebstemperaturen der Kolonne aufweist, Flüssigkeitsabweiser besitzt, die Flüssigkeit von der Trenneinrichtung ableiten und dadurch zwischen Trenneinrichtung und flüssigkeitsbenetzten Kolonneneinbauten ein 1 bis 50 mm, bevorzugt 5 bis 20 mm dickes Gaspolster schaffen.

3. Destillationskolonne nach Anspruch 2, dadurch gekennzeichnet, daß das Material der Flüssigkeitsabweiser nicht perforiert ist oder bei Verwendung von geordneten Packungen aus Drahtgewebe oder perforiertem Material einen mindestens gleich großen oder bevorzugt höheren Durchströmungsdruckverlust als die geordnete Packung aufweist.

## Claims

1. A distillation column (1) for separating a liquid mixture into a plurality of pure fractions, the distillation column being divided into 2 parts, a feed part and a take-off part (2; 3), in its middle region by a separation means effective in the longitudinal direction and the separation consisting of 2 walls (4) with a thermally insulating layer (5) in between, wherein the separation means consists of 2 walls with a gas space (5) in between and wherein the distance between the two walls is from 1 to 50 mm, preferably from 3 to 10 mm, and wherein a gas stream (6; 7), preferably nitrogen, is passed in at one end of the separation means, preferably the upper end, which stream emerges from the separation means, preferably at the opposite end, and is passed directly into the column or is passed in at the top of the column.

2. A distillation column as claimed in claim 1, wherein the separation means possesses, on both sides or on the side which has the lower operating temperatures of the column, liquid deflectors which deflect liquid from the separation means and thus create a gas cushion from 1 to 50 mm, preferably from 5 to 20 mm thick between the separation means and column baffles wet with liquid.

3. A distillation column as claimed in claim 2, wherein the material of the liquid deflectors is not perforated or, where stacked packings comprising wire fabric or perforated material are used, has a flow-through pressure loss which is at least equal to or preferably higher than that of the stacked packing.

## Revendications

1. Colonne de distillation (1) pour la séparation d'un mélange de liquides en plusieurs fractions pures, la colonne de distillation étant subdivisée, dans sa zone médiane, par un dispositif de séparation agissant en direction longitudinale, en deux parties, une partie amenée et une partie prélèvement (2; 3), et la séparation étant constituée de deux parois (4), avec une couche d'isolation thermique (5), placée en position intermédiaire, caractérisée par le fait que le dispositif de séparation est constitué de parois, avec une enceinte à gaz (5), placée en position intermédiaire, que l'espacement entre les deux parois est de 1 à 50 mm, de préférence de 3 à 10 mm, et que, à une extrémité du dispositif de séparation, de préférence l'extrémité supérieure, est introduit un écoulement de gaz (6; 7), de préférence d'azote, qui sort du dispositif de séparation, de préférence à l'extrémité opposée, et est directement introduit dans la colonne ou à la tête de la colonne.

2. Colonne de distillation selon la revendication 1, caractérisée par le fait que le dispositif de séparation présente, des deux côtés ou du côté auquel les températures de fonctionnement de la colonne sont plus basses, des dispositifs de refoulement de liquide, qui dévient le liquide venant du dispositif de séparation et un coussin de gaz, d'une épaisseur de 1 à 50 mm, de préférence de 5 à 20 mm, étant créé de ce fait, entre le dispositif de séparation et les habillages intérieurs de colonne, mouillés par le liquide.

3. Colonne de distillation selon la revendication 2, caractérisée par le fait que le matériau du dispositif de refoulement de liquide n'est pas perforé ou, en cas d'utilisation de garnissages ordonnés constitués d'un tissu de fil métallique ou d'un matériau perforé, présente une perte de charge d'écoulement au moins de la même valeur ou, de préférence, de valeur supérieure à celle que présente un garnissage ordonné.
